# EUROPEAN PATENT APPLICATION

(11) **EP 4 764 318 A1**
(43) Date of publication of application: **24.06.2026**
(21) Application number: 25206546.1
(22) Date of filing: 03.10.2025
(51) Int. Cl.: F24C 15/16, F24C 15/00

(54) **AN OVEN COMPRISING A STEAM-GENERATING COOKING TRAY**

(30) Priority: 18.12.2024 TR 2024019635
(71) Applicant: Arçelik Anonim Sirketi, 34445 Istanbul (TR)
(72) Inventor: DEMIRTEPE, YUSUF, 34445 ISTANBUL (TR); CILESIZ, FATIH, 34445 ISTANBUL (TR); GULER, EMRULLAH, 34445 ISTANBUL (TR); YASIN, FARUK, 34445 ISTANBUL (TR); YORULMAZ, MURAT, 34445 ISTANBUL (TR)

(57) **Abstract**

The present invention relates to an oven (1) comprising a cooking tray (2) having a first surface (4) and a second surface (5), a base (3) having an inner gap (6) between the first surface (4) and the second surface (5), wherein the inner gap (6) serves as a reservoir for water and as a chamber for steam generation, side walls (10) which rise from both lateral parts of the base (3) so as to be adjacent to the base (3) and which have openings (9) arranged at intervals for delivering the generated steam to the cooking chamber (11), and a water inlet path (11) for adding water into the inner gap (6).

## Description

### Technical Field

The present invention relates to cooking trays used in ovens, and particularly to a steam-generating cooking tray and method which provide steam cooking in gas and electric ovens without built-in steam generation systems.

### State of the Art

Ovens are devices widely used in both domestic and commercial settings for the preparation of various foods. These ovens are generally divided into two main categories based on energy sources: gas ovens and electric ovens. Over the years, various design improvements have been made to enhance cooking performance and meet consumers' demands for better cooking results.

One of the features which has gained popularity in recent years is steam cooking. Steam cooking offers various advantages compared to traditional dry-heat cooking methods, such as moisture retention, more even heat distribution, and improved flavor preservation. In the electric ovens, the steam-cooking function is typically implemented through the addition of a dedicated steam tank and associated control systems and software to manage the steam generation process.

However, integrating steam-cooking features introduces several challenges. For the gas ovens and electric ovens without built-in steam systems, it has been difficult or even impossible to achieve steam cooking without making significant changes to the oven design. Moreover, the inclusion of dedicated steam generation systems in the electric ovens increases manufacturing costs and complexity.

Another common issue, especially encountered in the gas ovens, is the uneven cooking due to the bottom of the food being cooked faster or overcooked compared to the top portion. This situation can lead to inconsistent textures and suboptimal cooking results for users.

Furthermore, adding steam-cooking features to the existing ovens or providing a cost-effective steam-cooking solution for a wide variety of oven types remains a challenge in the industry.

There is a recognized need for a steam-generating cooking tray which overcomes one or more of these problems.

In the state of the art Patent Application No. WO2022225659A1, an oven is disclosed, which provides steam support to the cooking chamber by placing a water reservoir on the upper part of the burner.

### Brief Description of the Invention

The aim of the present invention is to provide steam support to ovens which do not have steam-cooking functionality and to provide steam-cooking functionality by means of a cooking tray which ensures rapid steam generation using the heat formed in the oven.

Another aim of the present invention is the realization of an oven which allows the users to benefit from steam-cooking functionality in gas ovens and electric ovens without steam-cooking functionality, thereby offering a cost advantage.

Yet another aim of the present invention is the realization of an oven which, by means of the function of the tray, eliminates the problem of the bottom portion of the food being cooked more in gas ovens in particular.

Yet another aim of the present invention is the realization of an oven which improves cooking quality and cooking homogeneity by naturally generating steam in the oven.

Yet another aim of the present invention is the realization of an oven wherein the tray capable of providing steam support can, if no water is added to the reservoir thereof, allow for cooking without steam, so as to function equivalently to a conventional tray.

In order to achieve the above-mentioned aims, the present invention relates to an oven comprising a cooking tray having a first surface and a second surface, a base having an inner gap between the first surface and the second surface, wherein the inner gap serves as a reservoir for water and as a chamber for steam generation, side walls which rise from both lateral parts of the base so as to be adjacent to the base and which have openings arranged at intervals for delivering the generated steam to the cooking chamber, and a water inlet path for adding water into the inner gap.

The said figures are:

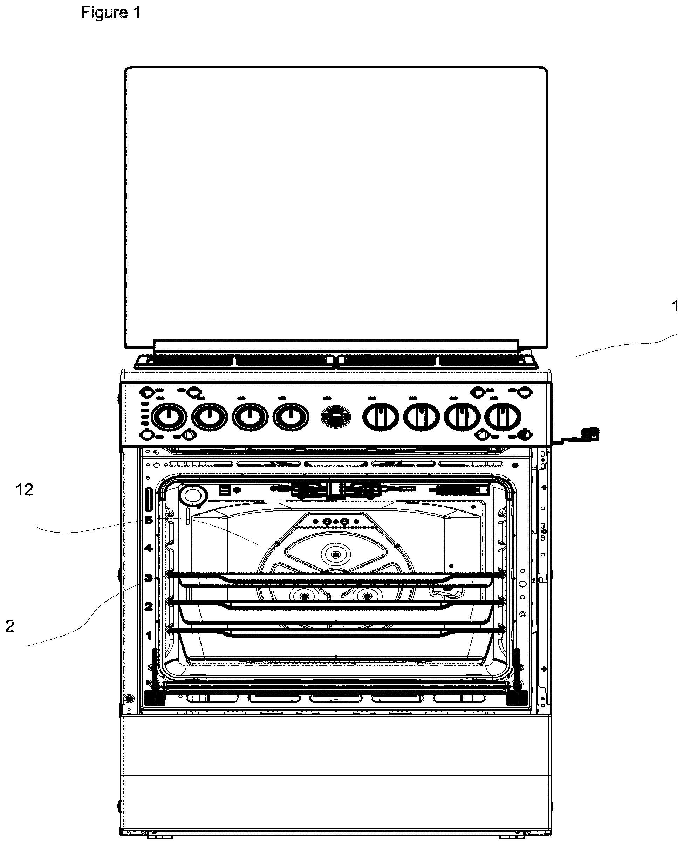

Figure 1 - is the front perspective view of the oven of the present invention.

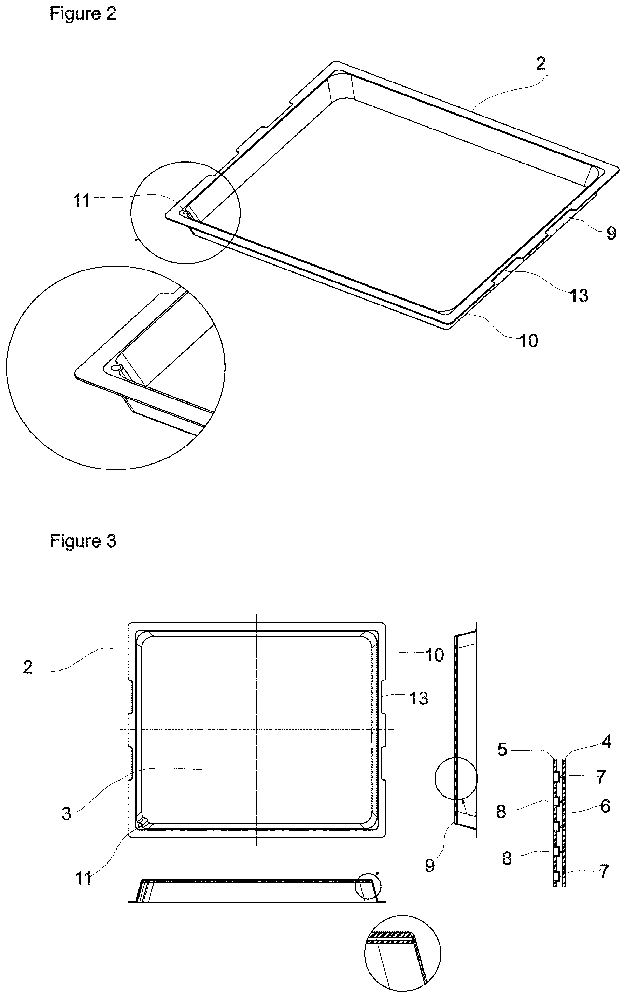

Figure 2 - is the top perspective view of the cooking tray of the present invention.
Figure 3 - is the bottom perspective view of the cooking tray of the present invention.

The following numerals are referred to in the description of the present invention:
1. Oven
2. Cooking tray
3. Base
4. First surface
5. Second surface
6. Inner gap
7. Protrusion
8. Cavity
9. First opening
10. Side wall
11. Water inlet path
12. Cooking chamber
13. Second opening

### Detailed Description of the Invention

The oven (1) of the present invention comprises a steam-generating cooking tray (2) designed to provide a steam-cooking function in various types of ovens, including both gas and electric ovens.

In an embodiment of the present invention, the oven (1) comprises a cooking tray (2) having a first surface (4) and a second surface (5), and a base (3) which forms an inner gap (6) between the first surface (4) and the second surface (5), wherein the inner gap (6) serves as a reservoir for water and as a chamber for steam generation. The said inner gap (6) is designed to convert water into steam efficiently by using the available heat generated during the operation of the oven (1).

In an embodiment of the present invention, the cooking tray (2) comprises a base (3) having an inner gap (6) of 4 to 6 mm between the first surface (4) and the second surface (5).

In an embodiment of the present invention, the cooking tray (2) comprises a water inlet path (11) for adding water into the inner gap (6). The water inlet path (11) allows the users to add the desired amount of water into the cooking tray (2) before the cooking process so as to enable the customization of the steam generation process according to specific recipes or cooking requirements.

In an embodiment of the present invention, the base (3) comprises side walls (10) which have openings (9) arranged at intervals to deliver the generated steam into the cooking chamber (12). The said openings (9) facilitate the distribution of steam around the food being cooked, providing even cooking and moisture retention.

In an embodiment of the present invention, the steam-generating cooking tray (2) comprises a stepped second surface (5) which is formed by a series of protrusions (7) raised toward the inner gap (6), which create an increased surface area for heat transfer to enable rapid vaporization of water at the lower base (3), and by cavities (8) provided between the said protrusions (7).

In an embodiment of the present invention, the upper surfaces, facing the inner gap (6), of the protrusions (7) are connected to the second surface (5) in a flat manner, and the lower parts thereof are connected to the second surface (5) in an inclined manner, and this structure increases the contact area between the water in the base (3) of the cooking tray (2) and the first surface (4), thereby enabling rapid vaporization. This structure increases the heat transfer surface area and maximizes the contact between the heated first surface (4) and the second surface (5) and the water in the inner gap (6) so as to improve the efficiency of steam generation.

In an embodiment of the present invention, the second surface (5) is manufactured from a thin sheet metal material by pressing method, ensuring the effective transfer of the heat generated in the oven (1) to the water required for steam generation and allowing the rapid conversion of water into superheated steam.

In an embodiment of the present invention, the cooking tray (2) is configured to generate steam by utilizing the existing heat source of the oven (1), whether it be a gas burner or an electric heating member. This configuration eliminates the need for additional energy input or modifications to the oven (1) system and makes the steam-generating cooking tray (2) a versatile and cost-effective solution for achieving steam-cooking in various oven types.

In an embodiment of the present invention, the cooking tray (2) comprises a reservoir for water and a chamber for steam generation by means of the inner gap (6) formed between the first surface (4) and the second surface (5) which constitute the base (3). When added into the said inner gap (6), water can be efficiently converted into steam using the heat generated during the operation of the oven (1). This configuration enables the cooking tray (2) to utilize the waste heat emitted from the exhaust of the oven (1) for steam generation, thereby improving overall energy efficiency.

In an embodiment of the present invention, the base (3), which has a double-walled structure with the first surface (4) and the second surface (5), also contributes to improving the heat distribution during the cooking process. By forming a barrier between the direct heat source and the cooking surface, the base (3) eliminates the issue of the bottom of the food being overcooked, particularly in gas ovens. This feature provides a solution to the problem where the bottom of foods tends to cook faster or more intensely compared to the rest.

In an embodiment of the present invention, the raised protrusions (7) positioned along the second surface (5) toward the inner gap (6) across the second surface (5), and the cavities (8) located between the said protrusions (7), are not present in the lower regions where the base (3) joins the side walls (10) of the cooking tray (2). This configuration helps control the direction of steam flow in the inner gap (6) and directs the generated steam toward the first openings (9) provided on the side walls (10) to be delivered into the cooking chamber (12).

In an embodiment of the present invention, the cooking tray (2) comprises the side walls (10) having the openings (9) for releasing the steam generated in the inner gap (6) into the cooking chamber (12). The said side walls (10) are formed using a bending method which creates the openings (9) for steam release. The bending method ensures precise control over the size, shape, and placement of the openings (9), thereby providing optimal steam distribution during the cooking process.

In an embodiment of the present invention, the cooking tray (2) comprises second openings (13) which are positioned at the upper portion of the side walls (10) and which are strategically aligned with the first openings (9) so as to direct the generated steam toward the upper portion of the food being cooked. This alignment creates a path for the upward flow of steam so as to surround the food and promote even cooking and moisture retention. By directing the steam toward the top of the food, the cooking tray (2) improves the overall cooking quality and helps prevent the surface of the food from drying out.

In an embodiment of the present invention, the controlled release of the steam through the second openings (13) provided at the upper portion of the side walls (10) prevents the formation of excessive pressure in the cooking chamber (12), thus maintaining the safe operating conditions throughout the cooking process.

In an embodiment of the present invention, the arrangement of the first openings (9) and the second openings (13) allows for a controlled steam release throughout the cooking process. As the water in the inner gap (6) is heated and converted into steam, pressure builds up and forces the steam to pass through the first openings (9). The aligned second openings (13) then direct the steam upward, creating a consistent moisture flow around the food. This design feature addresses common challenges encountered in the steam cooking, such as uneven moisture distribution or excessive steam buildup in specific areas of the oven cavity. By directing the steam toward the upper part of the food, the cooking tray (2) promotes more uniform cooking results and helps preserve the desired texture and moisture content of various food items.

In an embodiment of the present invention, the size and number of the first openings (9) in the side walls (10) are optimized to balance factors such as the steam release rate, pressure buildup within the inner gap (6), and overall cooking performance. This optimization ensures that the cooking tray (2) can deliver effective steam cooking across a variety of recipes and oven types.

In an embodiment of the present invention, the cooking tray (2) comprises a water inlet path (11) which is positioned on the side wall (10) of the cooking tray (2). The said water inlet path (11) is configured to enable the water to be added easily into the inner gap (6) between the first surface (4) and the second surface (5) of the base (3), while keeping the cooking surface dry. Positioning the water inlet path (11) on the side wall (10) of the cooking tray (2) provides convenient access for users to add water prior to the cooking process, without interfering with the placement of food on the main cooking surface.

In an embodiment of the present invention, the water inlet path (11) comprises a cap for preventing spillage during the placement of the cooking tray (2) into the oven (1). The said cap helps retain the water in the inlet path (11) and the inner gap (6), and reduces the risk of accidental spillage or leakage which could affect the cooking process or pose safety hazards. The cap can be designed to open and close as needed, thereby allowing controlled addition of water while maintaining a sealed environment during the cooking process.

The users can add a precise amount of water according to specific cooking requirements without affecting the cooked food or compromising the integrity of the cooking surface. This feature increases the usability and versatility of the cooking tray (2) and ensures the seamless integration of steam cooking across various recipes and cooking scenarios.

In an embodiment of the present invention, the steam-generating cooking tray (2) is designed to offer versatility in cooking applications. When no water is added to the inner gap (6) of the base (3), the cooking tray (2) is configured to function as a regular cooking tray. This dual-purpose design provides flexibility in cooking methods for users and allows for efficient use of kitchen equipment.

In cases where steam cooking is not desired, users can operate the cooking tray (2) without adding water into the inner gap (6). The specially shaped structure designed to enhance the heat transfer for steam generation at the bottom of the cooking tray (2) also contributes to improved heat distribution when used as a standard cooking tray.

In an embodiment of the present invention, the bending method used to create the steam release openings (9) on the side walls (10) of the cooking tray (2) involves mechanically pressing or compressing the metal to form precise slits or holes. This method allows for controlled customization of the size and shape of the openings (9), which is critical for optimizing steam distribution during the cooking process. The bending process is carefully calibrated to ensure that the openings (9) are not too large (which could lead to rapid steam escape) or too small (which could restrict steam flow and affect cooking performance). The durability of the material used for the cooking tray (2) is also important in the bending process, as it must withstand mechanical stress without cracking or tearing.

## Claims

1. An oven (1) **characterized by** a cooking tray (2) having a first surface (4) and a second surface (5), a base (3) having an inner gap (6) between the first surface (4) and the second surface (5), wherein the inner gap (6) serves as a reservoir for water and as a chamber for steam generation, side walls (10) which rise from both lateral parts of the base (3) so as to be adjacent to the base (3) and which have openings (9) arranged at intervals for delivering the generated steam to the cooking chamber (12), and a water inlet path (11) for adding water into the inner gap (6).

2. An oven (1) as in Claim 1, **characterized by** a base (3) comprising a stepped second surface (5) which is formed by a series of protrusions (7) raised toward the inner gap (6), which create an increased surface area for heat transfer, and by cavities (8) provided between the said protrusions (7).

3. An oven (1) as in Claim 1 or 2, **characterized by** a base (3) wherein the upper surfaces, facing the inner gap (6) of the protrusions (7) are connected to the second surface (5) in a flat manner, and the lower parts thereof are connected to the second surface (5) in an inclined manner.

4. An oven (1) as in any one of the above claims, **characterized by** the cooking tray (2) wherein the raised protrusions (7) positioned along the second surface (5) toward the inner gap (6) across the second surface (5), and the cavities (8) located between the said protrusions (7), are not present in the lower regions where the base (3) joins the side walls (10) of the cooking tray (2).

5. An oven (1) as in any one of the above claims, **characterized by** the cooking tray (2) comprising second openings (13) which are positioned at the upper portion of the side walls (10) and which are aligned with the first openings (9) so as to direct the generated steam toward the upper portion of the food being cooked.

6. An oven (1) as in any one of the above claims, **characterized by** the cooking tray (2) comprising a base (3) having an inner gap (6) of 4 to 6 mm between the first surface (4) and the second surface (5).

7. An oven (1) as in any one of the above claims, **characterized by** the cooking tray (2) comprising a water inlet path (11) which is positioned on the side wall (10) thereof.

8. An oven (1) as in Claim 7, **characterized by** the water inlet path (11) comprising a cap for preventing spillage of the water during the placement of the cooking tray (2) into the oven (1).

9. An oven (1) as in any one of Claims 5 to 8, **characterized by** the second openings (13) which are formed on the side walls (10) by bending method for steam release.
